# EUROPÄISCHE PATENTSCHRIFT

(11) **EP 2 369 183 B1**
(45) Veröffentlichungstag und Bekanntmachung des Hinweises auf die Patenterteilung: **21.11.2012**
(21) Anmeldenummer: 11156467.0
(22) Anmeldetag: 01.03.2011
(51) Int. Cl.: F04D 25/08, H02K 5/10

(54) **Ventilator**
Ventilator
Ventilateur

(30) Priorität: 22.03.2010 DE 102010012392
(43) Veröffentlichungstag der Anmeldung: 28.09.2011
(73) Patentinhaber: ebm-papst Mulfingen GmbH & Co. KG, 74673 Mulfingen (DE)
(72) Erfinder: Streng, Gunter, 74575, Schrozberg (DE); Hofmann, Walter, 74673, Mulfingen (DE)
(74) Vertreter: Patentanwälte Dr. Solf & Zapf

(56) Entgegenhaltungen:
- EP-A2- 2 068 003
- DE-U1-202006 018 454
- US-A1- 2009 196 744

## Beschreibung

Die vorliegende Erfindung betrifft einen Ventilator, bestehend aus einem Elektro-Außenläufermotor und einem Ventilatorrad, wobei der Außenläufermotor aus einem mit einem Isoliermaterial umkapselten Stator und einem den Stator topfförmig umschließenden, das Ventilatorrad tragenden Rotor (Außenläufer) besteht.

Ein derartiger Ventilator ist aus dem Dokument EP 1 404 008 A2 bekannt, worin ein Elektromotor mit einem Außenläufer-Rotor beschrieben ist, der auf seinem Außenumfang ein Lüfterrad trägt. Der Stator weist eine insbesondere aus einem Duroplast bestehende Statorisolierung auf, wobei ein mit Statorwicklungen versehenes Statorblechpaket unter gleichzeitiger Formgebung mit dem Isoliermaterial umpresst ist. Indem der Rotor den Stator ebenfalls umschließt, kann im Betrieb eine recht hohe Erwärmung im Bereich des Stators auftreten.

Der vorliegenden Erfindung liegt die Aufgabe zu Grunde, einen Ventilator der genannten Art so zu verbessern, dass eine effektive Motor-Entwärmung sowie günstige strömungstechnische Eigenschaften gewährleistet sind.

Erfindungsgemäß wird dies durch die Merkmale des Anspruchs 1 erreicht. Vorteilhafte Ausgestaltungsmerkmale und besondere Ausführungsarten der Erfindung sind in den abhängigen Ansprüchen enthalten.

Erfindungsgemäß ist demnach vorgesehen, dass einerseits der Rotor in einer vorderen Stirnwandung Lüftungsöffnungen für eine Kühlluft-Strömung und andererseits der Stator auf einer vorderen Stirnfläche über den Umfang verteilt angeordnete, den Lüftungsöffnungen axial gegenüberliegende Rippenansätze aufweisen, wobei ein Spaltbereich zwischen einem der Stirnwandung gegenüberliegenden Umfangsrand des Rotors und einem flanschartigen Statorträger einen Durchlass für die im Betrieb den Stator umströmende Kühlluft-Strömung bildet. Somit ermöglichen einerseits die Lüftungsöffnungen des Rotors und andererseits der Durchlass zwischen dem Umfangsrand des Rotors und dem Statorträger eine Kühlluft-Durchströmung des Motors, wobei die Kühlluft den Stator durch einen zwischen diesem und dem Rotor vorhandenen Umfangsspalt hindurch umströmt. Hierbei hängt die Richtung der Durchströmung von der Bauart des Ventilators sowie insbesondere davon ab, auf welcher Axialseite im Betrieb sich jeweils ein Unterdruck bzw. ein Überdruck ausbildet. Beispielsweise entsteht im Falle eines Radial- oder Diagonalventilators im Bereich einer axialen Ansaugöffnung ein Unterdruck, und wenn der Rotor mit der Stirnwandung und den Lüftungsöffnungen der Ansaugöffnung des Ventilatorrades zugewandt ist, wird durch den Unterdruck Kühlluft von der gegenüberliegenden Seite her angesaugt, d. h. die Kühlluft strömt durch den Durchlass am Umfangsrand des Rotors ein, umströmt den Stator und tritt durch die Lüftungsöffnungen der Stirnwandung wieder aus. Im Falle eines Axialventilators hängt die Strömungsrichtung der Kühlluft von der eigentlichen Förderrichtung des Ventilatorrades ab, und zwar ist sie stets gegenläufig zur Förderrichtung.

Dabei sind nun die Lüftungsöffnungen des Rotors und die Rippenansätze des Stators derart ausgebildet und relativ zueinander derart angeordnet, dass im Betrieb bei Rotation des Rotors die Motor-Kühlluft im Bereich zwischen den Stator-Rippenansätzen und den Rotor-Lüftungsöffnungen durch eine Art "Quirleffekt" verwirbelt wird. Von besonderer Bedeutung für die erreichte Motor-Entwärmung (Kühlung) ist demnach eine Wechselwirkung zwischen den Lüftungsöffnungen des Rotors und den bevorzugt aus dem Isoliermaterial angeformten Rippenansätzen des Stators. So wird die aufgrund des im Betrieb auf einer Seite des Ventilators herrschenden Unterdrucks angesaugte und dadurch als Kühlluft in den Motor einströmende Luft im Bereich zwischen den Lüftungsöffnungen und den Rippenansätzen - praktisch nach dem Prinzip eines Quirls - verwirbelt, was in Verbindung mit der durch die Rippenansätze vergrößerten, als Konvektionsfläche wirkenden Stator-Oberfläche eine sehr effektive Wärmeaufnahme (Konvektion) bewirkt, d. h. die Kühlluft nimmt die Motorwärme auf und entwärmt (kühlt) somit den Motor bzw. Stator. Die Kühlluft umströmt zudem den Stator durch den zwischen Rotor und Stator vorhandenen Umfangsspalt und entwärmt dabei den Stator weitergehend.

Trotz der erfindungsgemäßen Kühlluft-Durchströmung ist der Ventilator auch für Anwendungen in Feuchtbereichen geeignet (beispielsweise für Kälte- und Klima-Anwendungen), weil der umkapselte, d. h. umpresste oder umspritzte Stator eine hohe IP-Schutzart gemäß DIN EN 60529 und DIN 40050 Teil 9 gewährleistet.

In weiterer vorteilhafter Ausgestaltung sind sowohl die Lüftungsöffnungen mit einer bestimmten Öffnungs-Anzahl als auch die Rippenansätze mit einer bestimmten Rippen-Anzahl insbesondere radialsymmetrisch über den Umfang verteilt angeordnet. Dabei sollten die Öffnungs-Anzahl und die Rippen-Anzahl jedenfalls ungleich und bevorzugt auch teilerfremd sein. Diese ungleichen und bevorzugt auch teilerfremden Anzahlen der Lüftungsöffnungen einerseits und der Rippenansätze andererseits führen zu günstigen, d. h. geringen Betriebsgeräuschen insbesondere durch Vermeidung von Resonanz- bzw. Drehklangerscheinungen. Konkret sind mindestens zwei, bevorzugt aber eine größere Anzahl von Lüftungsöffnungen vorhanden. In einer vorteilhaften Ausführungsform sind beispielsweise sieben Lüftungsöffnungen und sechs Rippenansätze vorgesehen. Dabei definieren die Lüftungsöffnungen durch ihre Größe gemeinsam einen wirksamen Öffnungsquerschnitt, dessen Verhältnis zur gesamten, axial projizierten Querschnittsfläche des Rotors im Bereich von 10 % bis 30 % liegt.

Es ist weiterhin vorteilhaft, wenn die Lüftungsöffnungen jeweils einen umlaufenden, düsenartig in Richtung des Stators und mit einem maximalen Abstand von 4 mm bis in die Nähe der Rippenansätze vorspringenden Öffnungsrand aufweisen. Diese vorspringenden Öffnungsränder verstärken den erfindungsgemäßen "Quirleffekt" noch, indem sie als "Gegenansätze" mit den Rippenansätzen zusammenwirken; die Kühlluft wird folglich auf beiden axial gegenüberliegenden Seiten zwischen relativ gegeneinander rotierenden Ansätzen verwirbelt.

Gemäß einem weiteren Erfindungsaspekt ist zur Verbesserung der strömungstechnischen Eigenschaften, und zwar insbesondere für eine Ausgestaltung als Radialventilator, vorgesehen, dass der Rotor im radial äußeren Bereich seiner vorderen Stirnwandung über einen fasenartigen Wandungsabschnitt in eine zylindrische Umfangswandung übergeht, wobei der fasenartige Wandungsabschnitt mit der Längsachse des Motors einen Fasenwinkel im Bereich von 30° bis 60°,bevorzugt 50°, einschließt. Weiterhin ist es vorteilhaft, wenn die die Lüftungsöffnungen aufweisende Stirnwandung des Rotors leicht konisch in einem Konuswinkel zur Längsachse geneigt verläuft, wobei der Konuswinkel im Bereich von 60° bis 80°, vorzugsweise 70°, liegt. Durch diese besonderen Maßnahmen wird erreicht, dass im Falle eines Radialventilators auch bei kurzer axialer Baugröße, d. h. bei kompakter Bauform, im Bereich zwischen einem axialen Lufteinlass des Radialventilators, dem als Radialrad ausgebildeten Ventilatorrad und dem Rotor ein vergrößerter Einlassquerschnitt gebildet wird. Dies wird nachfolgend noch anhand der Zeichnungen genauer erläutert werden.

Zudem werden auch weitere besondere Ausgestaltungsmerkmale und erreichte Vorteile im Folgenden noch erläutert werden. Dazu wird die Erfindung beispielhaft anhand der Zeichnungen und darin dargestellter bevorzugter Ausführungsformen genauer beschrieben. Es zeigen:
- Fig. 1: einen erfindungsgemäßen Ventilator in einer ersten Ausführungsform als einseitig saugender Radialventilator (Radialgebläse) in einer teilgeschnittenen Seitenansicht,
- Fig. 2: eine Ansicht analog zu Fig. 1 einer zweiten Ausführungsform des Ventilators als doppelseitig saugender Radialventilator,
- Fig. 3: eine gesonderte Perspektivansicht eines erfindungsgemäßen Außenläufermotors auf dessen Vorderseite (Läuferseite),
- Fig. 4: eine Perspektivansicht des Außenläufermotors auf dessen Rückseite (Stator- bzw. Trägerseite),
- Fig. 5: eine perspektivische Explosionsdarstellung der wesentlichen Bestandteile des Außenläufermotors gemäß Fig. 3 und 4, und zwar
- Fig. 5a: den Stator,
- Fig. 5b: den Rotor und
- Fig. 5c: ein zusätzliches Montage- bzw. Gehäuseteil,
- Fig. 6: einen vergrößerten Axialschnitt durch den Außenläufermotor nach Fig. 3 bis 5,
- Fig. 7a: einen Axialschnitt des Rotors (ohne innere Magnete),
- Fig. 7b: den geschnittenen Rotor gemäß Fig. 7a in einer Perspektivansicht und
- Fig. 8: eine vergrößerte und exzentrisch längsgeschnittene Perspektivansicht des erfindungsgemäßen Außenläufermotors zur Erläuterung der Kühlluft-Durchströmung.

In den verschiedenen Figuren der Zeichnung sind gleiche Teile stets mit den gleichen Bezugszeichen versehen.

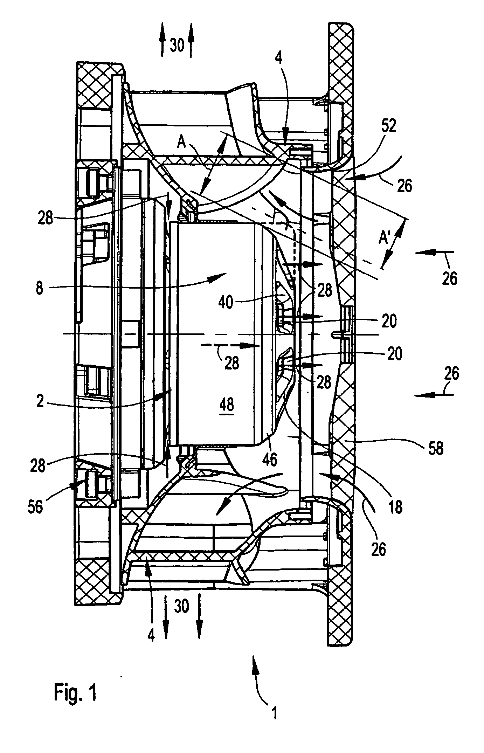

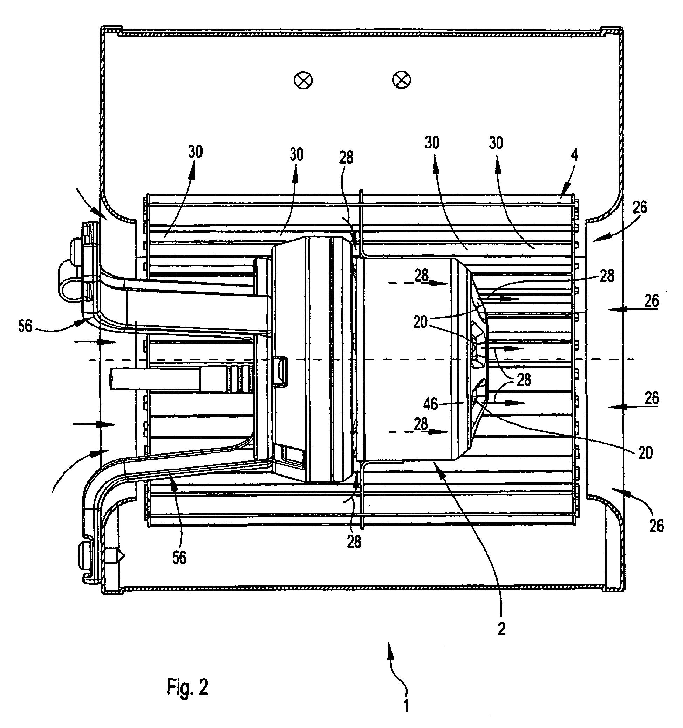

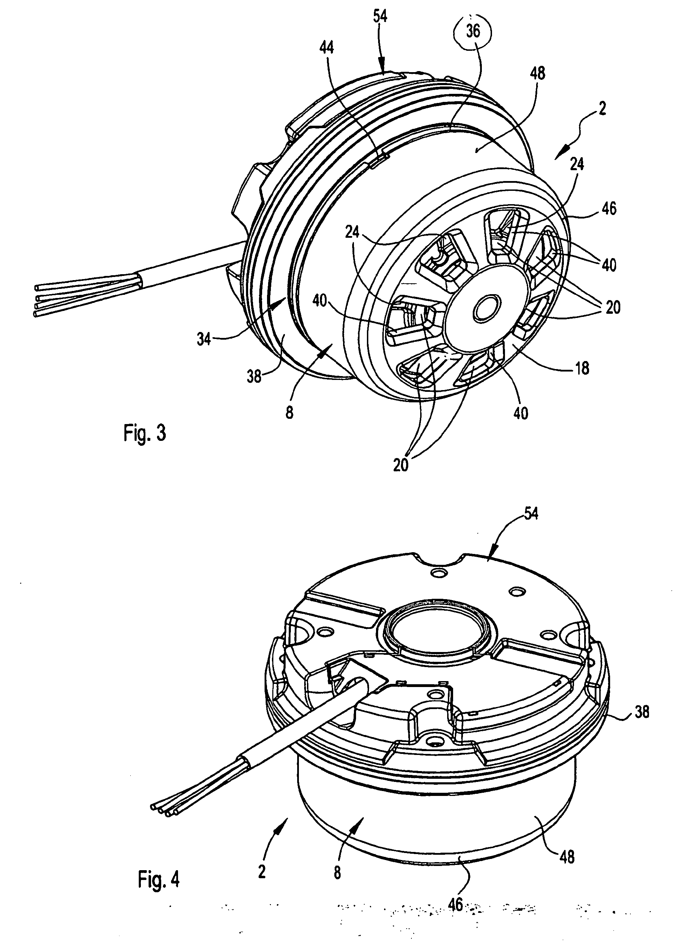

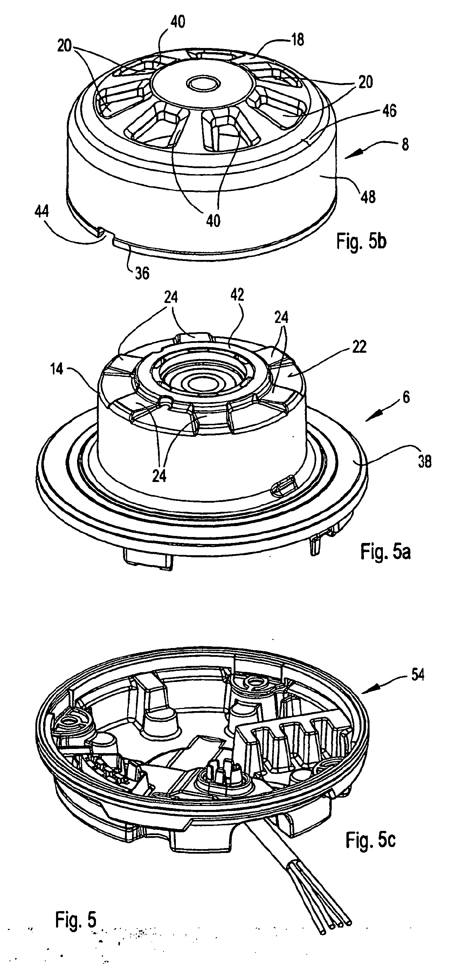

Wie sich zunächst aus Fig. 1 und 2 jeweils ergibt, besteht ein erfindungsgemäßer Ventilator 1 aus einem Elektro-Außenläufermotor 2 und einem Ventilatorrad 4. Der in den weiteren Figuren 3 bis 8 gesondert veranschaulichte Außenläufermotor 2 besteht seinerseits aus einem Stator 6 (siehe insbesondere Fig. 5a) und einem den Stator 6 topfförmig von einer Axial-Seite her umschließenden Rotor (Außenläufer) 8 (Fig. 5b). Wie sich besonders aus Fig. 5a, 6 und 8 ergibt, ist der Stator 6 unter Einschluss eines mit Statorwicklungen 10 versehenen Statorblechpaketes 12 unter Formgebung mit einem Isoliermaterial 14 umkapselt. Dies kann durch Umpressen, insbesondere aber Umspritzen mit einem geeigneten Kunststoff, z. B. Duroplast, erfolgen, wodurch der Stator 6 gemäß Fig. 5a eine insgesamt zylindrische Grundform erhält.

Wie sich weiter aus Fig. 1 und 2 ergibt, ist das Ventilatorrad 4 auf dem Außenumfang des Rotors 8 befestigt, so dass der Rotor 8 das Ventilatorrad 4 trägt.

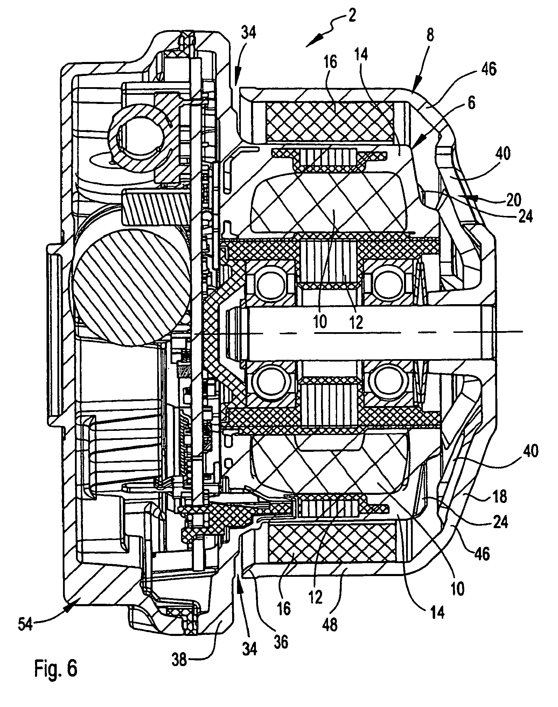

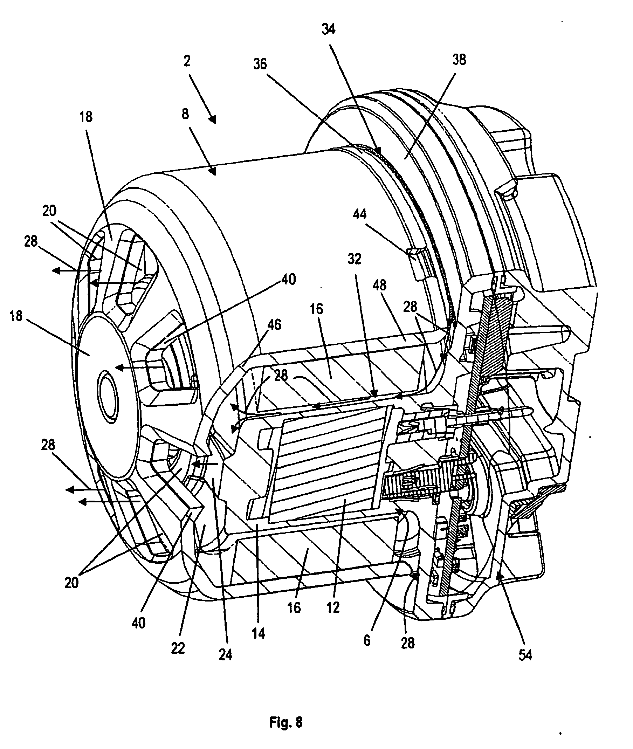

Bevorzugt ist der Elektro-Außenläufermotor 2 als elektronisch kommutierter, permanentmagneterregter Gleichstrommotor ausgebildet, wobei der Rotor 8 auf seinem inneren Umfang Permanentmagnete 16 aufweist. Hierzu wird insbesondere auf die Schnitte in Fig. 6 und 8 verwiesen. Der Stator 6 erzeugt in an sich bekannter Weise ein magnetisches Drehfeld, wodurch sich durch Wechselwirkung mit den Permanentmagneten 16 der Rotor 8 dreht. Zur Erzeugung des Drehfeldes werden die Wicklungen 10 des Stators 6 von einer Steuerelektronik angesteuert (kommutiert).

Erfindungsgemäß ist nun einerseits vorgesehen, dass der Rotor 8 in einer vorderen Stirnwandung 18 Lüftungsöffnungen 20 aufweist. Andererseits weist der Stator 6 auf einer vorderen Stirnfläche 22 über den Umfang verteilt angeordnete, den Lüftungsöffnungen 20 des Rotors 8 axial gegenüberliegende Rippenansätze 24 auf. Dazu wird insbesondere auf Fig. 5a sowie Fig. 8 verwiesen. Bevorzugt sind die Rippenansätze 24 aus dem Isoliermaterial 14 einstückig angeformt. Im Betrieb des Ventilators 1 rotiert somit der Rotor 8 mit den Lüftungsöffnungen 20 relativ zu dem Stator 6 mit den Rippenansätzen 24. Dabei wird gemäß Fig. 1 und 2 von dem Ventilatorrad 4 Luft in Richtung von eingezeichneten Pfeilen 26 angesaugt, wobei die angesaugte Luft bestimmungsgemäß durch das Ventilatorrad 4 beschleunigt und in Pfeilrichtung 30 ausgeblasen wird. Bedingt durch einen sich dabei ausbildenden Unterdruck- im dargestellten Beispiel als Radialventilator im Bereich vor der Stirnwandung 18 - entsteht zudem eine Kühlluft-Durchströmung, die durch Pfeile 28 angedeutet ist.

Wie sich insbesondere aus Fig. 8 ergibt, wird die Kühlluft im Bereich zwischen der Rotor-Stirnwandung 18 und der Stator-Stirnfläche 22 durch Wechselwirkung zwischen den Lüftungsöffnungen 20 und den Rippenansätzen 24 intensiv verwirbelt, wodurch die Kühlluft effektiv Wärme aus dem Stator 6 aufnimmt. Die Kühlluft strömt z. B. entsprechend der eingezeichneten Pfeilrichtung 28 durch einen Umfangsspalt 32 zwischen Stator 6 und Rotor 8, wobei sie über einen Spaltbereich 34 zwischen einem Umfangsrand 36 des Rotors 8 und einem Statorträger 38 radial von außen einströmt und aus den Lüftungsöffnungen 20 wieder ausströmt. Diese Strömung der Kühlluft ist in Fig. 8 durch Pfeile veranschaulicht. Dazu ist allerdings zu bemerken, dass je nach Ventilator-Ausführung auch eine umgekehrte Strömungsrichtung der Kühlluft möglich ist.

Zweckmäßig sind die Lüftungsöffnungen 20 mit einer bestimmten Öffnungs-Anzahl x radialsymmetrisch über den Umfang verteilt angeordnet, wobei mindestens zwei Lüftungsöffnungen 20 vorgesehen sind (x ≥ 2). Entsprechend sind auch die Rippenansätze 24 mit einer bestimmten Rippen-Anzahl y bevorzugt radialsymmetrisch über den Umfang verteilt angeordnet. Dabei ist es vorteilhaft, wenn die Anzahlen x, y der Lüftungsöffnungen 20 und der Rippenansätze 24 jedenfalls ungleich und insbesondere auch mathematisch teilerfremd sind. Somit gilt x ≠ y und vorzugsweise x ⊥ y. Durch diese Ausgestaltung wird ein günstiges Geräuschverhalten erreicht. Bei dem dargestellten, bevorzugten Ausführungsbeispiel sind sieben Lüftungsöffnungen 20 (x = 7) und sechs Rippenansätze 24 (y = 6) vorgesehen. Die Erfindung ist hierauf aber nicht beschränkt.

Es ist weiterhin vorteilhaft, wenn die Lüftungsöffnungen 20 eine trapezförmige bzw. kreisringsektorförmige Öffnungsform mit verrundeten Eckbereichen aufweisen, wodurch sie nach Art von Tortenstücken von innen radial nach außen breiter werden. Hierdurch wird eine gute Ausnutzung der zur Verfügung stehenden Fläche erreicht, d. h. die insgesamt zur Verfügung stehende Oberfläche im Bereich der Stirnfläche 22 (im Wesentlichen die axial projizierte Querschnittsfläche des Rotors 8) kann zu einem großen Anteil von 10 % bis 30 % durch die Lüftungsöffnungen 20 unterbrochen werden.

In weiterer vorteilhafter Ausgestaltung weist jede Lüftungsöffnung 20 einen umlaufenden, sich düsenartig in Richtung des Stators 6 erstreckenden Öffnungsrand 40 auf. Diese Öffnungsränder 40 erstrecken sich mit einem maximalen axialen Abstand von bis zu 4 mm bis in die Nähe der Rippenansätze 24. Im Betrieb rotieren somit die Lüftungsöffnungen 20 mit ihren Öffnungsrändern 40 nahe relativ zu den Rippenansätzen 24, wodurch eine effektive Luftverwirbelung erreicht wird.

Was nun die Rippenansätze 24 des Stators 6 betrifft, so sind diese gemäß Fig. 5a vorzugsweise radial, sternförmig auf der Stirnfläche 22 angeordnet. Die Stirnfläche 22 liegt in einer zur Motorlängsachse (Rotationsachse des Rotors 8) senkrechten Ebene. Im radial inneren Bereich ist ein konzentrischer, axial vorspringender Ringstegansatz 42 gebildet. Ausgehend von diesem Ringstegansatz 42 erstrecken sich die Rippenansätze 24 zunächst mit reduzierter Höhe und dann mit axial ansteigender Höhe radial nach außen. Die Oberflächen steigen somit radial von innen nach außen an. Die Grundform der Rippenansätze 24 in axialer Draufsicht ist etwa rechteckig oder leicht trapezförmig nach außen verschmälert. Die Rippenansätze 24 weisen in Umfangsrichtung Flankenflächen auf, die derart schräg ausgebildet sein können, dass sich die Rippenansätze 24 in axialer Richtung verschmälern. Die Form der Rippenansätze 24 hat in Wechselwirkung mit den Lüftungsöffnungen 20 und ihren Öffnungsrändern 40 einen Einfluss auf die Verwirbelung der im Betrieb durch die Lüftungsöffnungen 20 eintretenden Kühlluft. Zudem vergrößern die Rippenansätze 24 die wirksame Konvektionsfläche des Stators 6.

Wie sich noch aus Fig. 3, 5b, 7a, b und 8 ergibt, kann im Bereich des Umfangsrandes 36 des Rotors 8 mindestens eine den Strömungsquerschnitt für die Kühlluft vergrößernde Ausnehmung 44 gebildet sein.

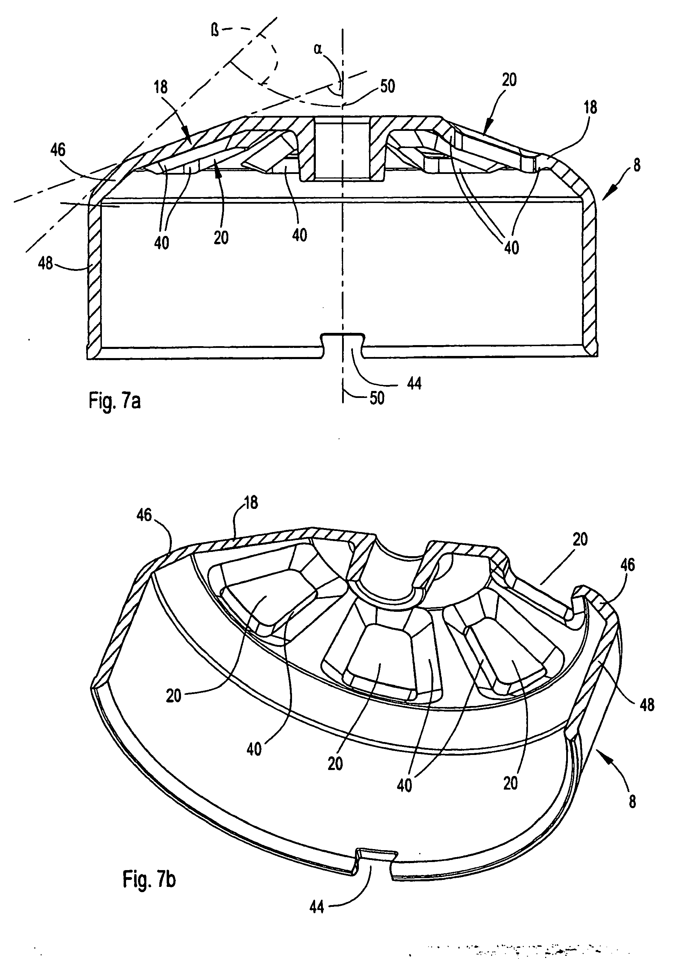

Fig 7a zeigt eine verbesserte strömungstechnische Ausgestaltung des Ventilators 1. In diesem Zusammenhang ist vorgesehen, dass der Rotor 8 im radial äußeren Bereich seiner vorderen Stirnwandung 18 über mindestens einen fasenartigen Wandungsabschnitt 46 in eine zylindrische Umfangswandung 48 übergeht. Gemäß Fig. 7a verläuft zudem die die Lüftungsöffnungen 20 aufweisende Stirnwandung 18 des Rotors 8 leicht konisch in einem Konuswinkel α zur Längsachse 50 geneigt. Der Konuswinkel α liegt vorzugsweise im Bereich von 60° bis 80°und insbesondere von 70°. Der fasenartige, die Stirnwandung 18 und die Umfangswandung 48 verbindende Wandungsabschnitt 46 schließt mit der Längsachse 50 bevorzugt einen Fasenwinkel β im Bereich von 30° bis 60°und insbesondere 50° ein.

Durch diese beschriebene vorteilhafte Ausgestaltung wird im Vergleich zu einem Rotor, bei dem die Stirnwandung in einer zur Längsachse 50 senkrechten Ebene liegt und direkt rechtwinklig in die Umfangswandung 48 übergeht, praktisch eine Art Abrundung im äußeren vorderen Übergangsbereich zwischen der Stirnwandung 18 und der Umfangswandung 48 erreicht. Wie in Fig. 1 veranschaulicht ist, wird dadurch eine Vergrößerung des Einlassquerschnitts erreicht, indem ein großer lichter Abstand A zwischen dem Rotor 8 und einem Einlassbereich 52 des Ventilators 1 in der Ausgestaltung als Radialventilator gebildet ist. Zusätzlich sind in Fig. 1 gestrichelt die Verhältnisse mit einem herkömmlichen Ventilator veranschaulicht, wobei ein geringerer Abstand A' vorhanden ist.

In weiterer vorteilhafter Ausgestaltung ist gemäß Fig. 5a vorgesehen, dass der Statorträger 38 als ein flanschartiger, einstückig angeformter Abschnitt des den Stator 6 umkapselnden Isoliermaterials 14 gebildet ist. Zudem bildet der flanschartige Statorträger 38 auf der von dem Stator 6 abgewandten Seite gemeinsam mit einem zusätzlichen Gehäuseteil 54 (siehe die gesonderte Darstellung in Fig. 5c) ein Elektronikgehäuse für eine nicht näher bezeichnete Steuerelektronik. Zudem fungiert das Gehäuseteil 54 auch als Trägerteil für den gesamten Außenläufermotor 2, indem es über Montageteile 56 (vgl. Fig. 1 und 2) an oder in einem Ventilatorgehäuse befestigt oder befestigbar ist.

Abschließend sei nochmals erwähnt, dass die Erfindung sowohl für Radial- oder Diagonalventilatoren als auch grundsätzlich für Axialventilatoren geeignet ist. In Fig. 1 ist beispielhaft eine Ausführung als einseitig saugender Radialventilator dargestellt, wobei das Ventilatorrad 4 als Radialrad mit einem vorderen axialen Einlass (im Anschluss an den Einlassbereich 52), mehreren Radialschaufeln und einer radialen Ausblasrichtung ausgebildet ist. Die Radialschaufeln sind in üblicher Weise zwischen Deckscheiben angeordnet. Das Ventilatorgehäuse kann gegebenenfalls ein vorderes Schutzgitter 58 im Einlassbereich 52 aufweisen.

In Fig. 2 ist eine Ausführung als doppelseitig saugender Radialventilator dargestellt, wobei das Ventilatorrad 4 als Radialrad mit zwei axial gegenüberliegenden Einlässen, mehreren Radialschaufeln und ebenfalls einer radialen Ausblasrichtung ausgebildet ist.

In beiden Fällen gemäß Fig. 1 und 2 können die Radialschaufeln rückwärts gekrümmt, vorwärts gekrümmt oder gegebenenfalls auch gerade (radial) ausgeführt sein.

Der Rotor 8 kann als Formteil aus Metall oder aus Kunststoff gebildet sein. Bei einer Ausführung aus einem weichmagnetischen Metall wirkt die Umfangswandung 48 auch als magnetisches Rückschlusselement für die innenseitig angeordneten Permanentmagnete 16. Wenn alternativ dazu der Rotor 8 in der Hauptsache aus Kunststoff besteht, ist innenseitig zusätzlich ein Rückschlussring erforderlich.

## Patentansprüche

1. Ventilator (1) bestehend aus einem Elektro-Außenläufermotor (2) und einem Ventilatorrad (4), wobei der Außenläufermotor (2) aus einem mit einem Isoliermaterial (14) umkapselten Stator (6) und einem den Stator (6) topfförmig umschließenden, das Ventilatorrad (4) tragenden Rotor (8) besteht,
**dadurch gekennzeichnet, dass** einerseits der Rotor (8) in einer vorderen Stimwandung (18) Lüftungsöffnungen (20) und andererseits der Stator (6) auf einer vorderen Stirnfläche (22) über den Umfang verteilt angeordnete, den Lüftungsöffnungen (20) gegenüberliegende Rippenansätze (24) aufweisen, wobei ein Spaltbereich (34) zwischen einem der Stimwandung (18) gegenüberliegenden Umfangsrand (36) des Rotors (8) und einem Statorträger (38) einen Durchlass für eine im Betrieb den Stator (6) umströmende Kühlluft bildet.

2. Ventilator nach Anspruch 1,
**dadurch gekennzeichnet, dass** sowohl die Lüftungsöffnungen (20) mit einer bestimmten Öffnungs-Anzahl (x) als auch die Rippenansätze (24) mit einer bestimmten Rippen-Anzahl (y) insbesondere radialsymmetrisch über den Umfang verteilt angeordnet sind, wobei die Öffnungs-Anzahl (x) und die Rippen-Anzahl (y) ungleich und insbesondere teilerfremd sind.

3. Ventilator nach Anspruch 1 oder 2,
**dadurch gekennzeichnet, dass** die Lüftungsöffnungen (20) eine trapezartige Öffnungsform aufweisen.

4. Ventilator nach einem der Ansprüche 1 bis 3,
**dadurch gekennzeichnet, dass** die Lüftungsöffnungen (20) jeweils einen umlaufenden, düsenartig in Richtung des Stators (6) und mit einem maximalen Abstand von 4 mm bis in die Nähe der Rippenansätze (24) vorspringenden Öffnungsrand (40) aufweisen.

5. Ventilator nach einem der Ansprüche 1 bis 4,
**dadurch gekennzeichnet, dass** die Lüftungsöffnungen (20) gemeinsam in der Summe einen Öffnungsquerschnitt aufweisen, dessen Verhältnis zur gesamten Querschnittsfläche des Rotors (8) im Bereich von 10 % bis 30 % liegt.

6. Ventilator nach einem der Ansprüche 1 bis 5,
**dadurch gekennzeichnet, dass** die Rippenansätze (24) des Stators (6) radial angeordnet sind.

7. Ventilator nach einem der Ansprüche 1 bis 6,
**dadurch gekennzeichnet, dass** im Bereich des Umfangsrandes (36) des Rotors (8) mindestens eine den Strömungsquerschnitt für die Kühlluft vergrößernde Ausnehmung (44) gebildet ist.

8. Ventilator nach einem der Ansprüche 1 bis 7,
**dadurch gekennzeichnet, dass** die die Lüftungsöffnungen (20) aufweisende Stirnwandung (18) des Rotors (8) leicht konisch in einem Konuswinkel (α) zur Längsachse (50) geneigt verläuft, wobei der Konuswinkel (α) im Bereich von 60° bis 80°, insbesondere 70°, liegt.

9. Ventilator nach einem der Ansprüche 1 bis 8,
**dadurch gekennzeichnet, dass** der Rotor (8) im radial äußeren Bereich seiner vorderen Stimwandung (18) über einen fasenartigen Wandungsabschnitt (46) in eine Umfangswandung (48) übergeht, wobei der fasenartige Wandungsabschnitt (46) mit der Längsachse (50) einen Fasenwinkel (β) im Bereich von 30° bis 60°, insbesondere 50°, einschließt.

10. Ventilator nach einem der Ansprüche 1 bis 9,
**dadurch gekennzeichnet, dass** der Statorträger (38) als flanschartiger, einstückig angeformter Abschnitt des den Stator (6) umkapselnden Isoliermaterials (14) gebildet ist.

11. Ventilator nach einem der Ansprüche 1 bis 10,
**dadurch gekennzeichnet, dass** der flanschartige Statorträger (38) auf der von dem Stator (6) abgewandten Seite gemeinsam mit einem zusätzlichen Gehäuseteil (54) ein Elektronikgehäuse für eine Steuerelektronik bildet.

12. Ventilator nach einem der Ansprüche 1 bis 11,
**gekennzeichnet durch** eine Ausführung als einseitig saugender Radialventilator, wobei das Ventilatorrad (4) als Radialrad mit einem vorderen axialen Einlass, mehreren Radiaischaufeln und einer radialen Ausblasrichtung ausgebildet ist.

13. Ventilator nach einem der Ansprüche 1 bis 11,
**gekennzeichnet durch** eine Ausführung als doppelseitig saugender Radialventilator, wobei das Ventilatorrad (4) als Radialrad mit zwei axial gegenüberliegenden Einlässen, mehreren Radialschaufeln und einer radialen Ausblasrichtung ausgebildet ist.

14. Ventilator nach einem der Ansprüche 1 bis 11,
**gekennzeichnet durch** eine Ausgestaltung als Axialventilator, wobei das Ventilatorrad (4) als Axialrad mit mehreren Axial-Lüfterflügeln ausgebildet ist.

15. Ventilator nach einem der Ansprüche 1 bis 14,
**dadurch gekennzeichnet, dass** der Außenläufermotor (2) als kollektorfoser, elektronisch kommutierter Gleichstrommotor ausgebildet ist.

## Claims

1. A fan (1) consisting of an electric external rotor motor (2) and of a fan wheel (4), the external rotor motor (2) consisting of a stator (6) encapsulated with an insulating material (14), and of a rotor (8) carrying the fan wheel (4) enclosing the stator (6) in a pot-shaped manner,
**characterized in that**, on the one hand, the rotor (8) has ventilation openings (20) in a front wall (16) and, on the other hand, the stator (6) has projecting fins (24) on a front area (22) opposite the ventilation openings that are arranged and distributed over the circumference, wherein a gap (34) forms a passage between the circumferential rim (36) of the rotor (8) opposite the front wall (18) and a stator carrier (38) for the cooling air current flowing around the stator (6) during operation.

2. A fan according to claim 1,
**characterized in that** the ventilation openings (20) with a definite number of openings (x) as well as the projecting fins (24) with a definite number of fins (y) are in particular arranged and distributed over the circumference in a radial symmetric manner, the number of openings (x) and the number of fins (y) being unequal and in particular mutually prime.

3. A fan according to any one of claims 1 or 2,
**characterized in that** the ventilation openings (20) have a trapezoidal shape.

4. A fan according to any one of claims 1 to 3,
**characterized in that** each of the ventilation openings (20) has a circumferential, nozzle-like opening rim (40) that protrudes in the direction of the stator (6) and with a maximum distance of 4 mm extends out to the proximity of the projecting fins (4).

5. A fan according to any one of claims 1 to 4,
**characterized in that** all the ventilation openings (20) have a total opening cross-section whose relationship to the total cross-sectional area of the rotor (8) is in the range of 10 % to 30 %.

6. A fan according to any one of claims 1 to 5,
**characterized in that** the projecting fins (24) of the stator (6) are arranged radially.

7. A fan according to any one of claims 1 to 6,
**characterized in that** in the region of the circumferential rim (36) of the rotor (8) at least one recess (44) is formed that increases the flow cross-section for the cooling air.

8. A fan according to any one of claims 1 to 7,
**characterized in that** the front wall (18) of the rotor (8) having ventilation openings (20) is slightly conically tilted relative to the longitudinal axis (50) at a cone angle (α), the cone angle (α) being in the range of 60° to 80°, in particular 70°.

9. A fan according to any one of claims 1 to 8,
**characterized in that** in the radial outer region of its front end (18) the rotor (8) is converted into a circumferential wall (48) via a chamfered wall section (46), whereby the chamfered wall section (46) comprises a chamfer angle (β) to the longitudinal axis (50) in the range of 30° to 60°, in particular 50°.

10. A fan according to any one of claims 1 to 9,
**characterized in that** the stator carrier (38) is configured as a flange-like, integrally molded section of the insulating material (14) encapsulating the stator (6).

11. A fan according to any one of claims 1 to 10,
**characterized in that** the flange-like stator carrier (38), together with an additional housing part (54), forms an electronics housing for an electronics control system on the side facing away from the stator (6).

12. A fan according to any one of claims 1 to 11, **characterized by** an embodiment as a radial, unilateral suction fan, the fan wheel (4) being configured as a radial wheel with an axial front inlet, several radial blades and a radial blow-out direction.

13. A fan according to any one of claims 1 to 11,
**characterized by** an embodiment as a radial, bilateral suction fan, the fan wheel (4) being configured as a radial wheel with two axially opposite inlets, several radial blades and a radial blow-out direction.

14. A fan according to any one of claims 1 to 11,
**characterized by** an arrangement as an axial fan, the fan wheel (4) being configured as an axial wheel with several axial fan blades.

15. A fan according to any one of claims 1 to 14,
**characterized in that** the external rotor motor (2) is configured as a brushless, electronically commutated DC motor.

## Revendications

1. Ventilateur (1) constitué d'un moteur électrique à induit extérieur (2) et d'une roue de ventilateur (4), dans lequel le moteur à induit extérieur (2) est constitué d'un stator (6) encapsulé par un matériau isolant (14) et d'un rotor (8) entourant le stator (6) de manière à présenter une forme de pot, supportant la roue de ventilateur (4),
**caractérisé en ce que** d'un côté, le rotor (8) présente dans une paroi frontale avant (18) des ouvertures d'aération (20), et **en ce que** de l'autre côté le stator (6) présente des saillies formant des nervures (24) disposées de manière répartie sur la périphérie sur une face frontale avant (22), opposées aux ouvertures d'aération (20), dans lequel une zone de fente (34), entre un bord périphérique (36) du rotor (8) opposé à la paroi frontale (18) et un support de stator (38), forme un passage pour un air de refroidissement contournant le stator (6) lors du fonctionnement.

2. Ventilateur selon la revendication 1,
**caractérisé en ce qu'**aussi bien les ouvertures d'aération (20) comportant un nombre d'ouvertures défini (x) que les saillies formant des nervures (24) comportant un nombre de nervures défini (y) sont disposées de manière répartie sur la périphérie en particulier de manière radialement symétrique, dans lequel le nombre d'ouvertures (x) et le nombre de nervures (y) ne sont pas identiques et sont relativement, en particulier, des nombres premiers.

3. Ventilateur selon la revendication 1 ou 2,
**caractérisé en ce que** les ouvertures d'aération (20) présentent une forme d'ouverture trapézoïdale.

4. Ventilateur selon l'une quelconque des revendications 1 à 3,
**caractérisé en ce que** les ouvertures d'aération (20) présentent respectivement un bord d'ouverture (40) s'étendant sur toute la périphérie, faisant saillie à la manière de buse en direction du stator (6) et à une distance maximale de 4 mm jusqu'aux abords des saillies formant des nervures (24).

5. Ventilateur selon l'une quelconque des revendications 1 à 4,
**caractérisé en ce que** les ouvertures d'aération (20) présentent conjointement ensemble une section transversale d'ouverture, dont le rapport par rapport à la surface totale de section transversale du rotor (8) se situe dans la plage allant de10%à30%.

6. Ventilateur selon l'une quelconque des revendications 1 à 5,
**caractérisé en ce que** les saillies formant des nervures (24) du stator (6) sont disposées de manière radiale.

7. Ventilateur selon l'une quelconque des revendications 1 à 6,
**caractérisé en ce qu'**au moins un évidement (44) agrandissant la section transversale d'écoulement pour l'air de refroidissement est formé dans la zone du bord périphérique (36) du rotor (8).

8. Ventilateur selon l'une quelconque des revendications 1 à 7,
**caractérisé en ce que** la paroi frontale (18) du rotor (8) présentant les ouvertures d'aération (20) s'étend de manière inclinée par rapport à l'axe longitudinal (50) légèrement de manière conique en un angle de cône (α),dans lequel la valeur de l'angle de cône (α) se situe dans la plage allant de 60° à 80°, est en particulier de 70°.

9. Ventilateur selon l'une quelconque des revendications 1 à 8,
**caractérisé en ce que** le rotor (8) passe dans la zone radialement extérieure de sa paroi frontale avant (18), d'une section de paroi présentant une forme à la manière d'un chanfrein (46) dans une paroi périphérique (48), sachant que la section de paroi présentant une forme à la manière d'un chanfrein (46) forme avec l'axe longitudinal (50) un angle de chanfrein (β) dont la valeur se situe dans la plage allant de 30° à 60°, forme en particulier un angle de chanfrein de 50°.

10. Ventilateur selon l'une quelconque des revendications 1 à 9,
**caractérisé en ce que** le support de stator (38) est formé comme une section du matériau isolant (14) encapsulant le stator (6), formée d'un seul tenant à la manière d'une bride.

11. Ventilateur selon l'une quelconque des revendications 1 à 10,
**caractérisé en ce que** le support de stator (38) présentant une forme à la manière d'une bride forme conjointement avec une partie de carter (54) supplémentaire, sur le côté faisant face au stator (6), un carter d'électronique pour une électronique de commande.

12. Ventilateur selon l'une quelconque des revendications 1 à 11,
**caractérisé par** une réalisation en tant que ventilateur radial aspirant d'un côté, dans lequel la roue de ventilateur (4) est réalisée sous la forme d'une roue radiale dotée d'une entrée axiale avant, de plusieurs ailettes radiales et d'un sens de soufflage radial.

13. Ventilateur selon l'une quelconque des revendications 1 à 11,
**caractérisé par** une réalisation en tant que ventilateur radial aspirant des deux côtés, sachant que la roue de ventilateur (4) est réalisée sous la forme d'une roue radiale dotée de deux entrées axialement opposées, de plusieurs ailettes radiales et d'un sens de soufflage radial.

14. Ventilateur selon l'une quelconque des revendications 1 à 11,
**caractérisé par** une configuration en tant que ventilateur axial, sachant que la roue de ventilateur (4) est réalisée sous la forme d'une roue axiale dotée de plusieurs pales d'aération axiales.

15. Ventilateur selon l'une quelconque des revendications 1 à 14,
**caractérisé en ce que** le moteur à induit extérieur (2) est réalisé sous la forme d'un moteur à courant continu sans collecteur commuté de manière électronique.
